# EUROPEAN PATENT SPECIFICATION

(11) **EP 4 530 485 B1**
(45) Date of publication and mention of the grant of the patent: **15.04.2026**
(21) Application number: 24157423.5
(22) Date of filing: 13.02.2024
(51) Int. Cl.: F16B 23/00, B25B 13/06, B25B 15/00

(54) **HIGH TORQUE TRANSMISSION FASTENER AND DRIVING TOOL THEREFOR**
BEFESTIGUNGSELEMENT MIT HOHER DREHMOMENTÜBERTRAGUNG UND ANTRIEBSWERKZEUG DAFÜR
DISPOSITIF DE FIXATION À TRANSMISSION DE COUPLE ÉLEVÉ ET OUTIL D'ENTRAÎNEMENT ASSOCIÉ

(30) Priority: 28.09.2023 TW 112137427
(43) Date of publication of application: 02.04.2025
(73) Proprietor: Kwantex Research Inc., Tainan City 718012 (TW)
(72) Inventor: LIN, Chao-Wei, 718012 Tainan City (TW)
(74) Representative: Stöckeler, Ferdinand

(56) References cited:
- US-A1- 2006 228 189
- US-A1- 2009 175 702

## Description

The disclosure relates to a fastener and a tool for driving the fastener, and more particularly to a high torque transmission fastener and a driving tool therefor.

A conventional flanged hexagon screw includes an abutting seat that is in the shape of a circular plate, and a hexagonal protrusion that protrudes from the abutting seat. The hexagonal protrusion of the conventional flanged hexagon screw is for a wrench or a driving tool that has a hexagonal hole to grip so that the driving tool or the wrench may drive the conventional flanged hexagon screw to rotate. However, the hexagonal protrusion has a plurality of sharp edges that are formed on an outer surface thereof, and the sharp edges may easily be worn when the conventional flanged hexagon screw is driven by the driving tool/wrench to rotate. When the sharp edges of the hexagonal protrusion are worn, the outer surface of the hexagonal protrusion may become curved, and a contact area between the hexagonal protrusion and the driving tool/wrench is decreased. A torque exerted by a user may thus not be sufficiently transmitted to the conventional flanged hexagon screw. In addition, if the sharp edges are worn out, the driving tool/wrench may slip off the conventional flanged hexagon screw when the user uses the driving tool/wrench to turn the conventional flanged hexagon screw. Consequently, the conventional flanged hexagon screw may not be able to be driven by the driving tool/wrench to rotate. US 2009/175702 A1 discloses a high torque transmission fastener and a socket therefore.

Therefore, an object of the disclosure is to provide a fastener that may not be worn easily and that may not cause a driving tool/wrench which drives the fastener to slip off easily.

According to an aspect of the disclosure, there is provided a fastener according to claim 1.

Another object of the disclosure is to provide a driving tool that can alleviate at least one of the drawbacks of the prior art.

According to an aspect of the disclosure, there is provided a driving tool according to claim 6.

Other features and advantages of the disclosure will become apparent in the following detailed description of the embodiment(s) with reference to the accompanying drawings. It is noted that various features may not be drawn to scale.
FIG. 1 is a perspective view of an embodiment of a fastener according to the disclosure.
FIG. 2 is a top view of a screw head of the fastener.
FIG. 3 is a schematic view illustrating a driven protrusion of the screw head.
FIGS. 4 and 5 are perspective views illustrating different configurations of the fastener.
FIGS. 6 to 11 are top views illustrating different configurations of a recess of the driven protrusion.
FIG. 12 is a sectional view illustrating the recess of the fastener and a conventional driver bit.
FIG. 13 is a perspective view of an embodiment of a driving tool according to the disclosure and the fastener.
FIG. 14 is a top view of a driving socket of the driving tool.
FIG. 15 is a schematic view illustrating a conventional wrench driving the fastener.

It should be noted herein that for clarity of description, spatially relative terms such as "top," "bottom," "upper," "lower," "on," "above," "over," "downwardly," "upwardly" and the like may be used throughout the disclosure while making reference to the features as illustrated in the drawings. The features may be oriented differently (e.g., rotated 90 degrees or at other orientations) and the spatially relative terms used herein may be interpreted accordingly.

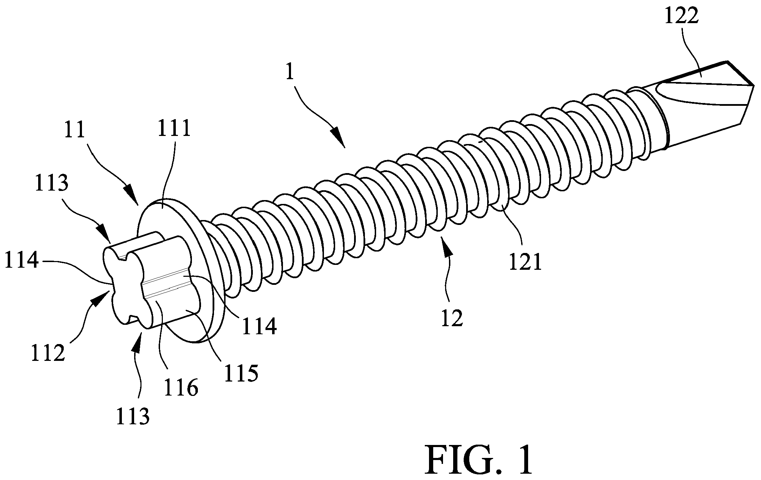

Referring to FIGS. 1 to 3, an embodiment of a fastener 1 according to the disclosure includes a screw head 11 and a screw shank 12. The screw head 11 includes an abutment seat 111 that is disk-shaped and that is connected to the screw shank 12, and a driven protrusion 112 that protrudes from one side of the abutment seat 111 opposite to the screw shank 12. The driven protrusion 112 has four driven wall portions 113 and four guiding wall portions 114 that are disposed about a central axis of the fastener 1 in an alternating arrangement. The driven wall portions 113 are equiangularly spaced apart from each other. Each of the guiding wall portions 114 is straight, and has two opposite ends that are respectively connected to two of the driven wall portions 113 adjacent to the guiding wall portion 114. A ratio of a longest distance (B) between two of the driven wall portions 113 that are non-adjacent to each other to a longest distance (A) between two of the driven wall portions 113 that are adjacent to each other is greater than 1.16 (i.e., (B) divided by (A) is greater than 1.16). Each of the driven wall portions 113 has a curved section 115 that defines an arc of a circle and that has two opposite ends, and two straight sections 116 each of which extends from a respective one of the ends of the curved section 115 and interconnects the respective one of the ends of the curved section 115 and a respective one of two of the guiding wall portions 114 adjacent to the driven wall portion 113. A radius of curvature (C) of the curved section 115 of each of the driven wall portions 113 is greater than a length (D) of each of the straight sections 116 of the driven wall portion 113. A central angle of the curved section 115 of each of the driven wall portions 113 is smaller than 180 degrees, an arc length of the curved section 115 of each of the driven wall portions 113 on an imaginary plane perpendicular to the central axis of the fastener 1 is thus shorter than half of a circumference of the circle defined by the curved section 115 of the driven wall portion 113. The screw shank 12 extends from one side of the screw head 11 that is distal from the driven protrusion 112 of the screw head 11 in an axial direction of the central axis, and has a thread 121 that helically extends therealong, and an end section 122 that is formed on one end of the thread 121 opposite to the screw head 11. Specifically, in this embodiment, the screw shank 12 and the driven protrusion 112 are respectively connected to two opposite surfaces of the abutment seat 111 in the axial direction of the central axis.

It is noted that, in one embodiment, the abutment seat 111 may not be disk-shaped, and may be shaped differently according to actual requirements. Furthermore, in one embodiment, the abutment seat 111 may be omitted such that the driven protrusion 112 is directly connected to another end of the screw shank 12 opposite to the end section 122 of the screw shank 12.

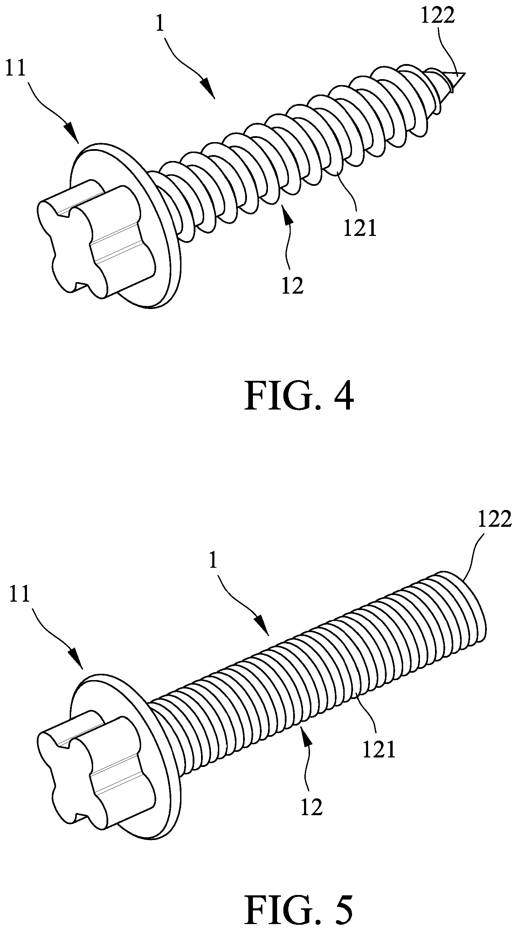

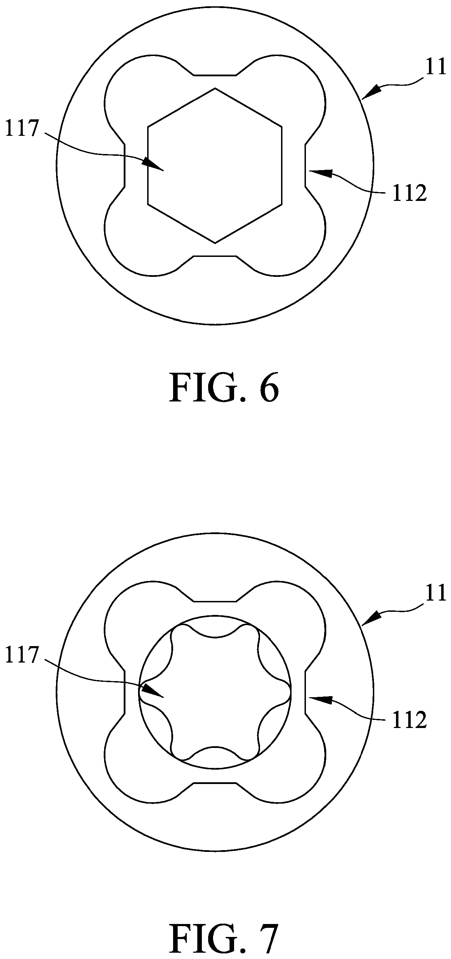

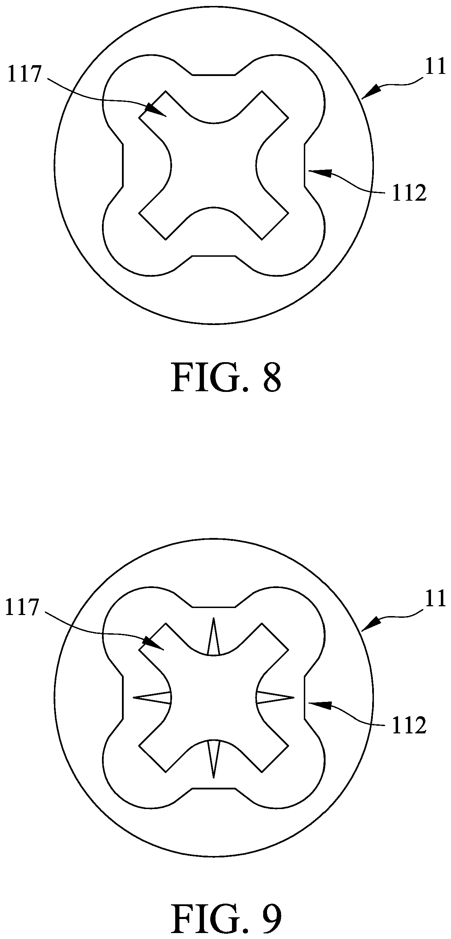

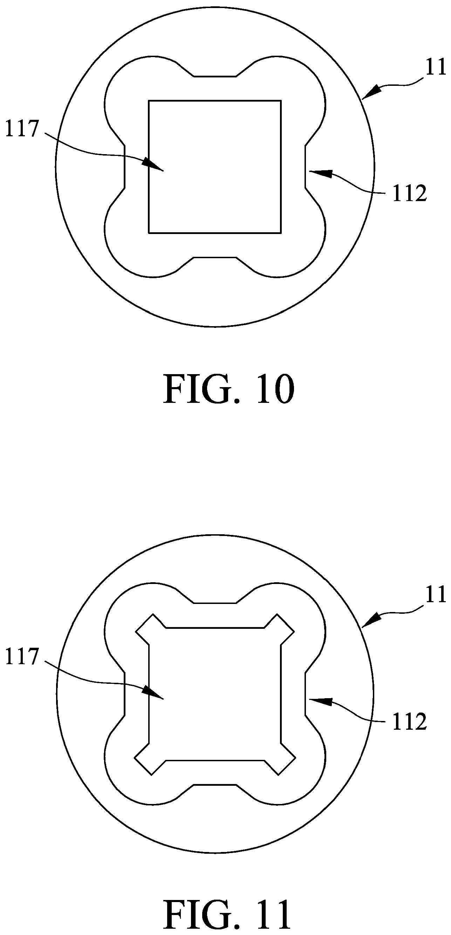

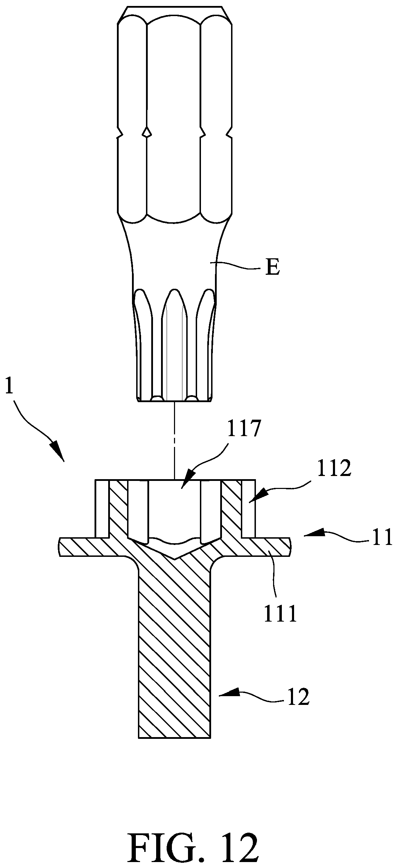

Referring further to FIGS. 4 and 5, in cooperation with FIG. 1, the end section 122 of the screw shank 12 may have different configurations according to actual requirements. For example, as shown in FIG. 1, the end section 122 is configured to be a drilling end. As shown in FIG. 4, the end section 122 is configured to be a pointed end. As shown in FIG. 5, the end section 122 is configured to be a blunt/flat end. Referring to FIGS. 6 to 12, the driven protrusion 112 of the screw head 11 has a surface opposite to the screw shank 12, and a recess 117 that is recessed from the surface along the axial direction of the central axis. A cross section of the recess 117 of the screw head 11 on the imaginary plane perpendicular to the central axis is configured to be one of a hexagonal shape (see FIG. 6), a hexalobular shape (see FIG. 7), a cruciform shape (see FIG. 8), an asterisked shape (see FIG. 9), a quadrilateral shape (see FIG. 10), and a shape of a combination of a cross and a quadrilateral (see FIG. 11). The recess 117 of the screw head 11 is adapted for a driver bit that corresponds in shape to the cross section of the recess 117 to insert thereinto. As shown in FIG. 12, a common driver bit (E) may be used for driving the fastener 1. Thus, the fastener 1 may be used for more purposes.

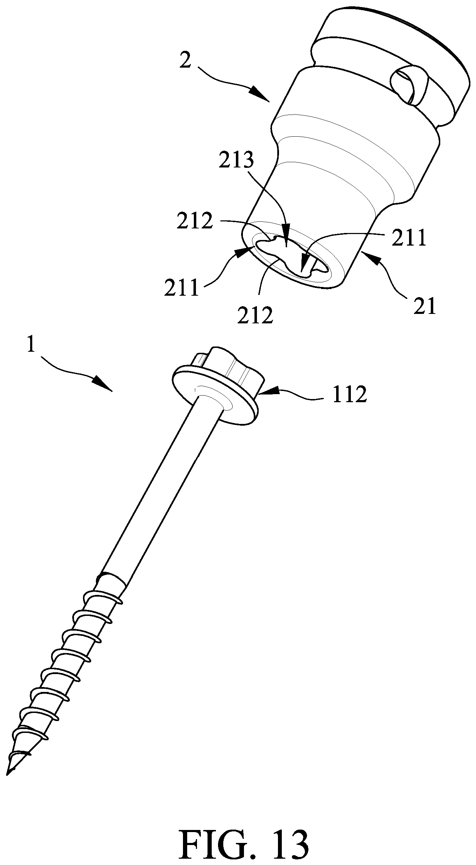

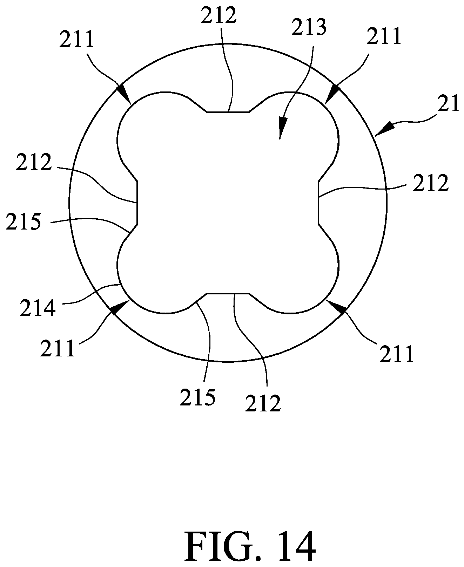

Referring to FIGS. 13 and 14, an embodiment of a driving tool 2 according to the disclosure is adapted for driving the fastener 1, and includes a main body 21. The main body 21 has four driving wall portions 211 and four guiding wall portions 212 that are disposed about a central axis of the driving tool 2 in an alternating arrangement. The driving wall portions 211 of the main body 21 are equiangularly spaced apart from each other. Each of the guiding wall portions 212 of the main body 21 is straight, and has two opposite ends that are respectively connected to two of the driving wall portions 211 of the main body 21 adjacent to the guiding wall portion 212 of the main body 21. The driving wall portions 211 and the guiding wall portions 212 of the main body 21 cooperatively define a driving socket 213. A ratio of a longest distance between two of the driving wall portions 211 of the main body 21 that are non-adjacent to each other to a longest distance between two of the driving wall portions 211 of the main body 21 that are adjacent to each other is greater than 1.16. Each of the driving wall portions 211 of the main body 21 has a curved section 214 that defines an arc of a circle and that has two opposite ends, and two straight sections 215 each of which extends from a respective one of the ends of the curved section 214 of the main body 21 and interconnects the respective one of the ends of the curved section 214 of the main body 21 and a respective one of two of the guiding wall portions 212 of the main body 21 adjacent to the driving wall portion 211 of the main body 21. A radius of curvature of the curved section 214 of each of the driving wall portions 211 of the main body 21 is greater than a length of each of the straight sections 215 of the driving wall portion 211 of the main body 21. A central angle of the curved section 214 of each of the driving wall portions 211 of the main body 21 is smaller than 180 degrees, an arc length of the curved section 214 of each of the driving wall portions 211 on an imaginary plane perpendicular to the central axis of the driving tool 2 is thus shorter than half of a circumference of the circle defined by the curved section 214 of the driving wall portion 211.

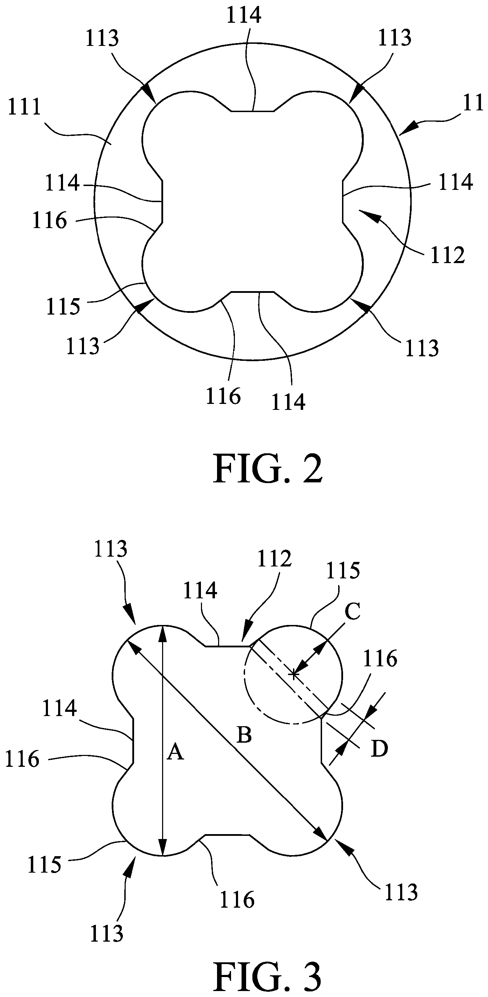

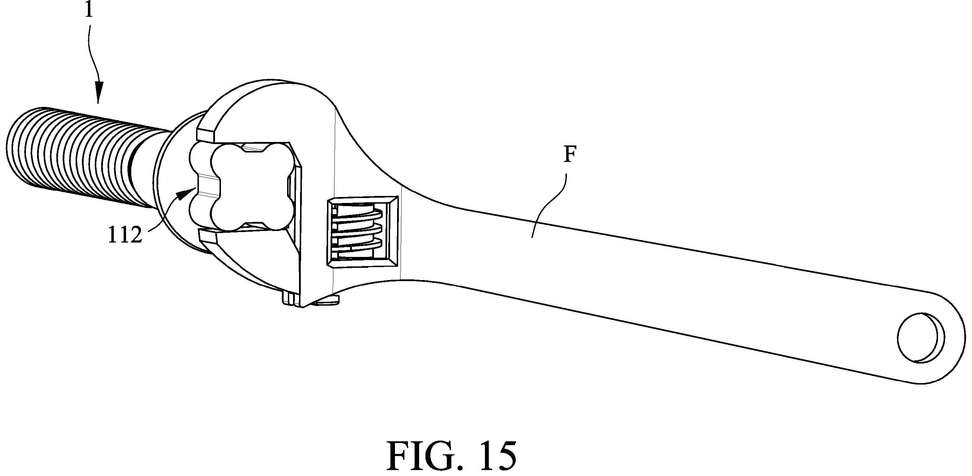

Referring further to FIG. 15, in cooperation with FIGS. 2 and 13, the driven protrusion 112 of the fastener 1 may be coupled to the driving socket 213 of the driving tool 2 that corresponds in shape thereto (i.e., the driving wall portions 211 and the guiding wall portions 212 of the driving tool 2 cooperatively surround the driven protrusion 112), or may be driven by a wrench (F) (see FIG. 15). By virtue of the ratio of the longest distance (B) between two of the driven wall portions 113 that are non-adjacent to each other to the longest distance (A) between two of the driven wall portions 113 that are adjacent to each other being greater than 1.16 and greater than a ratio of a distance across corners of a regular hexagon to a distance across flats of the regular hexagon, which is 1.1547, the likelihood that the driving tool 2 or the wrench (F) slips off the fastener 1 during operation may be greatly lowered. According to a test, a conventional wrench may slip off a conventional M10 flanged hexagon screw when a torque that is exerted on the conventional wrench is about 54 to 55 Newton meters (Nm). However, when the conventional wrench is used to drive the fastener 1 that has the same outer diameter as the conventional M10 flanged hexagon screw, the conventional wrench may not slip off the fastener 1 even when a torque that is exerted on the conventional wrench reaches a maximum torque that can be applied on the fastener 1 before failure of the fastener 1 occurs, which is 88 Nm. Thus, the fastener 1 provides better slip resistance.

Referring to FIGS. 2, 13 and 14 again, when a user rotates the fastener 1 via the driving tool 2, by virtue of the curved sections 115 of the fastener 1 and the curved sections 214 of the driving tool 2, the fastener 1 and the driving tool 2 may avoid abrasion and damage during the operation, and the torque exerted on the driving tool 2 may be sufficiently transmitted to the fastener 1. By virtue of the straight sections 116, 215, a contact area between the driving tool 2 and the fastener 1 is increased. Although manufacturing tolerance exists in the driving tool 2 and the fastener 1, the driving tool 2 and the fastener 1 may be able to fittingly engage with each other by the presence of the straight sections 116, 215 so that the torque exerted on the driving tool 2 may be sufficiently transmitted to the fastener 1, and that stability during the operation may be enhanced. Moreover, by virtue of the straight sections 116, the driven protrusion 112 of the fastener 1 may easily be separated from a mold during its manufacturing process. Thus, the mold for the driven protrusion 112 may avoid damage caused by failure to be separated from the driven protrusion 112, thereby increasing the service life of the mold for the fastener 1.

In summary, because the fastener 1 provides slip resistance and is able to avoid abrasion and damage during the operation, the user may use the conventional wrench instead of a power tool to drive the fastener 1 when there is not enough space to operate the power tool (e.g., when the fastener 1 has to be fastened to/removed from an object adjacent to the ground), and the torque exerted on the conventional wrench may still be sufficiently transmitted to the fastener 1 while the stability during the operation is provided, thereby making the operation with hand tools relatively easy. Furthermore, the end section 122 of the screw shank 12 may have different configurations according to the actual requirements so that the fastener 1 may be used for fastening different objects. The driven protrusion 112 may have the recess 117 that come in different shapes so that the common driver bit (E) may be inserted into the recess 117 to drive the fastener 1. Thus, the fastener 1 may be used for more purposes. Therefore, the purpose of the disclosure is achieved.

In the description above, for the purposes of explanation, numerous specific details have been set forth in order to provide a thorough understanding of the embodiment(s). It will be apparent, however, to one skilled in the art, that one or more other embodiments may be practiced as long as such embodiments fall within the wording of the appended claims.

## Claims

1. A fastener (1) comprising:
a screw head (11) including a driven protrusion (112) that has four driven wall portions (113) and four guiding wall portions (114) which are disposed about a central axis of the fastener (1) in an alternating arrangement, the driven wall portions (113) being equiangularly spaced apart from each other, each of the guiding wall portions (114) being straight and having two opposite ends that are respectively connected to two of the driven wall portions (113) adjacent to the guiding wall portion (114), a ratio of a longest distance (B) between two of the driven wall portions (113) that are non-adjacent to each other to a longest distance (A) between two of the driven wall portions (113) that are adjacent to each other being greater than 1.16; and
a screw shank (12) extending from one side of the screw head (11) that is distal from the driven protrusion (112) of the screw head (11) in an axial direction of the central axis, and having at least one thread (121) that helically extends therealong;
wherein
each of the driven wall portions (113) has a curved section (115) that defines an arc of a circle and that has two opposite ends; **characterized in that**: each of the driven wall portions (113) has further two straight sections (116) each of which extends from a respective one of the ends of the curved section (115) and interconnects the respective one of the ends of the curved section (115) and a respective one of two of the guiding wall portions (114) adjacent to the driven wall portion (113), a central angle of the curved section (115) of each of the driven wall portions (113) being smaller than 180 degrees, wherein for each of the driven wall portions (113), each of the straight sections (116) is inclined to the respective one of the two of the guiding wall portions (114) adjacent to the driven wall portion (113) and is straight.

2. The fastener (1) as claimed in claim 1, wherein a radius of curvature (C) of the curved section (115) of each of the driven wall portions (113) is greater than a length (D) of each of the straight sections (116) of the driven wall portion (113).

3. The fastener (1) as claimed in any one of claims 1 and 2, wherein the driven protrusion (112) of the screw head (11) has a surface opposite to the screw shank (12), and a recess (117) that is recessed from the surface along the axial direction of the central axis.

4. The fastener (1) as claimed in claim 3, wherein a cross section of the recess (117) of the screw head (11) on an imaginary plane perpendicular to the central axis is configured to be one of a hexagonal shape, a hexalobular shape, a cruciform shape, an asterisked shape, a quadrilateral shape, and a shape of a combination of a cross and a quadrilateral.

5. The fastener (1) as claimed in any one of claims 1 to 4, wherein the screw head (11) further includes an abutment seat (111) that is connected to the screw shank (12), the driven protrusion (112) protruding from one side of the abutment seat (111) opposite to the screw shank (12).

6. A driving tool (2) adapted for driving the fastener (1) as claimed in claim 1, the driving tool (2) comprising:
a main body (21) having four driving wall portions (211) and four guiding wall portions (212) that are disposed about a central axis of the driving tool (2) in an alternating arrangement, the driving wall portions (211) of the main body (21) being equiangularly spaced apart from each other, each of the guiding wall portions (212) of the main body (21) being straight and having two opposite ends that are respectively connected to two of the driving wall portions (211) of the main body (21) adjacent to the guiding wall portion (212) of the main body (21), the driving wall portions (211) and the guiding wall portions (212) of the main body (21) cooperatively defining a driving socket (213), a ratio of a longest distance between two of the driving wall portions (211) of the main body (21) that are non-adjacent to each other to a longest distance between two of the driving wall portions (211) of the main body (21) that are adjacent to each other being greater than 1.16;
wherein
each of the driving wall portions (211) of the main body (21) has a curved section (214) that defines an arc of a circle and that has two opposite ends; **characterized in that**: each of the driving wall portions (211) has further two straight sections (215) each of which extends from a respective one of the ends of the curved section (214) of the main body (21) and interconnects the respective one of the ends of the curved section (214) of the main body (21) and a respective one of two of the guiding wall portions (212) of the main body (21) adjacent to the driving wall portion (211) of the main body (21), a central angle of the curved section (214) of each of the driving wall portions (211) of the main body (21) being smaller than 180 degrees, wherein for each of the driving wall portions (211), each of the straight sections (215) is inclined to the respective one of the two of the guiding wall portions (212) adjacent to the driving wall portion (211) and is straight.

7. The driving tool (2) as claimed in claim 6, wherein a radius of curvature of the curved section (214) of each of the driving wall portions (211) of the driving tool (2) is greater than a length of each of the straight sections (215) of the driving wall portion (211) of the driving tool (2).

## Patentansprüche

1. Eine Befestigungsvorrichtung (1), die folgende Merkmale aufweist:
einen Schraubenkopf (11), der einen angetriebenen Vorsprung (112) umfasst, der vier angetriebene Wandabschnitte (113) und vier führende Wandabschnitte (114) aufweist, die im Wechsel um eine zentrale Achse der Befestigungsvorrichtung (1) angeordnet sind, wobei die angetriebenen Wandabschnitte (113) gleichwinklig voneinander beabstandet sind, wobei jeder der führenden Wandabschnitte (114) gerade ist und zwei gegenüberliegende Enden aufweist, die jeweils mit zwei der angetriebenen Wandabschnitte (113) benachbart zu dem führenden Wandabschnitt (114) verbunden sind, wobei ein Verhältnis einer längsten Strecke (B) zwischen zwei der angetriebenen Wandabschnitte (113), die nicht benachbart sind, zu einer längsten Strecke (A) zwischen zwei der angetriebenen Wandabschnitte (113), die benachbart sind, größer als 1,16 ist; und
einen Schraubenschaft (12), der sich von einer Seite des Schraubenkopfes (11), die vom angetriebenen Vorsprung (112) des Schraubenkopfes (11) in einer Achsrichtung der zentralen Achse distal ist, erstreckt, und der zumindest ein Gewinde (121) aufweist, das sich spiralförmig entlang desselben erstreckt;
wobei jeder der angetriebenen Wandabschnitte (113) einen gekrümmten Bereich (115) aufweist, der einen Kreisbogen definiert und der zwei gegenüberliegende Enden aufweist; **dadurch gekennzeichnet, dass**: jeder der angetriebenen Wandabschnitte (113) ferner zwei gerade Bereiche (116) aufweist, wobei sich jeder derselben von einem jeweiligen der Enden des gekrümmten Bereichs (115) erstreckt und das jeweilige eine der Enden des gekrümmten Bereichs (115) und jeweils einen von zwei der führenden Wandabschnitte (114), die benachbart zum angetriebenen Wandabschnitt (113) sind, miteinander verbindet, wobei ein zentraler Winkel des gekrümmten Bereichs (115) von jedem der angetriebenen Wandabschnitte (113) kleiner als 180° ist, wobei für jeden der angetriebenen Wandabschnitte (113) jeder der geraden Bereiche (116) zu dem jeweiligen einen der zwei der führenden Wandabschnitte (114) geneigt ist, die benachbart zum angetriebenen Wandabschnitt (113) sind, und gerade ist.

2. Die Befestigungsvorrichtung (1) gemäß Anspruch 1, wobei ein Krümmungsradius (C) des gekrümmten Bereichs (115) von jedem der angetriebenen Wandabschnitte (113) größer ist als eine Länge (D) von jedem der geraden Bereiche (116) des angetriebenen Wandabschnitts (113).

3. Die Befestigungsvorrichtung (1) gemäß einem der Ansprüche 1 und 2, wobei der angetriebene Vorsprung (112) des Schraubenkopfes (11) eine Oberfläche gegenüber dem Schraubenschaft (12) und eine Ausnehmung (117) aufweist, die von der Oberfläche entlang der Achsrichtung der zentralen Achse zurückgesetzt ist.

4. Die Befestigungsvorrichtung (1) gemäß Anspruch 3, wobei ein Querschnitt der Ausnehmung (117) des Schraubenkopfes (11) auf einer imaginären Ebene senkrecht zur zentralen Achse dazu konfiguriert ist, eine Sechskantform, eine Innensechskantform, eine Kreuzform, eine Sternenform, eine Vierecksform oder eine Form aus einer Kombination aus einem Kreuz und einem Viereck zu sein.

5. Die Befestigungsvorrichtung (1) gemäß einem der Ansprüche 1 bis 4, wobei der Schraubenkopf (11) ferner eine Anlagefläche (111) umfasst, die mit dem Schraubenschaft (12) verbunden ist, wobei der angetriebene Vorsprung (112) von einer Seite der Anlagefläche (111) gegenüber dem Schraubenschaft (12) vorsteht.

6. Ein Antriebswerkzeug (2), das für das Antreiben der Befestigungsvorrichtung (1) gemäß Anspruch 1 angepasst ist, wobei das Antriebswerkzeug (2) folgende Merkmale aufweist:
einen Hauptkörper (21), der vier antreibende Wandabschnitte (211) und vier führende Wandabschnitte (212) aufweist, die im Wechsel um eine zentrale Achse des Antriebswerkzeugs (2) angeordnet sind, wobei die antreibenden Wandabschnitte (211) des Hauptkörpers (21) gleichwinklig voneinander beabstandet sind, wobei jeder der führenden Wandabschnitte (212) des Hauptkörpers (21) gerade ist und zwei gegenüberliegende Enden aufweist, die jeweils mit zwei der antreibenden Wandabschnitte (211) des Hauptkörpers (21) verbunden sind, die benachbart zu dem führenden Wandabschnitt (212) des Hauptkörpers (21) sind, wobei die antreibenden Wandabschnitte (211) und die führenden Wandabschnitte (212) des Hauptkörpers (21) gemeinsam eine Antriebsbuchse (213) definieren, wobei ein Verhältnis einer längsten Strecke zwischen zwei der antreibenden Wandabschnitte (211) des Hauptkörpers (21), die nicht benachbart sind, zu einer längsten Strecke zwischen zwei der antreibenden Wandabschnitte (211), die benachbart sind, größer als 1,16 ist;
wobei jeder der antreibenden Wandabschnitte (211) des Hauptkörpers (21) einen gekrümmten Bereich (214) aufweist, der einen Kreisbogen definiert und der zwei gegenüberliegende Enden aufweist; **dadurch gekennzeichnet, dass**: jeder der antreibenden Wandabschnitte (211) ferner zwei gerade Bereiche (215) aufweist, wobei sich jeder derselben von einem jeweiligen der Enden des gekrümmten Bereichs (214) des Hauptkörpers (21) erstreckt und das jeweilige eine der Enden des gekrümmten Bereichs (214) des Hauptkörpers (21) und jeweils einen von zwei der führenden Wandabschnitte (212) des Hauptkörpers (21), die benachbart zum antreibenden Wandabschnitt (211) des Hauptkörpers (21) sind, miteinander verbindet, wobei ein zentraler Winkel des gekrümmten Bereichs (214) von jedem der antreibenden Wandabschnitte (211) des Hauptkörpers (21) kleiner als 180° ist, wobei für jeden der antreibenden Wandabschnitte (211) jeder der geraden Bereiche (215) zu dem jeweiligen einen der zwei der führenden Wandabschnitte (212) geneigt ist, die benachbart zum antreibenden Wandabschnitt (211) sind, und gerade ist.

7. Das Antriebswerkzeug (2) gemäß Anspruch 6, wobei ein Krümmungsradius des gekrümmten Bereichs (214) von jedem der antreibenden Wandabschnitte (211) des Antriebswerkzeugs (2) größer ist als eine Länge von jedem der geraden Bereiche (215) des antreibenden Wandabschnitts (211) des Antriebswerkzeugs (2).

## Revendications

1. Dispositif de fixation (1) comprenant :
une tête de vis (11) comprenant une saillie entraînée (112) qui comporte quatre parties de paroi entraînées (113) et quatre parties de paroi de guidage (114) qui sont disposées autour d'un axe central du dispositif de fixation (1) selon une disposition alternée, les parties de paroi entraînées (113) étant espacées les unes des autres de manière équiangulaire, chacune des parties de paroi de guidage (114) étant droite et comportant deux extrémités opposées qui sont respectivement reliées à deux des parties de paroi entraînées (113) adjacentes à la partie de paroi de guidage (114), un rapport entre une plus longue distance (B) entre deux des parties de paroi entraînées (113) qui sont non adjacentes l'une à l'autre sur la plus longue distance (A) entre deux des parties de paroi entraînées (113) qui sont adjacentes l'une à l'autre étant supérieur à 1,16 ; et
une tige de vis (12) s'étendant depuis un côté de la tête de vis (11) qui est distal par rapport à la saillie entraînée (112) de la tête de vis (11) dans une direction axiale de l'axe central, et comportant au moins un filetage (121) qui s'étend de manière hélicoïdale le long de celle-ci ;
dans lequel chacune des parties de paroi entraînées (113) comporte une section courbe (115) qui définit un arc de cercle et qui comporte deux extrémités opposées ; **caractérisé en ce que** : chacune des parties de paroi entraînées (113) comporte en outre deux sections droites (116) qui s'étendent chacune à partir d'une extrémité respective de la section courbe (115) et relient l'une respective des extrémités de la section courbe (115) à l'une respective des deux parties de paroi de guidage (114) adjacentes à la partie de paroi entraînée (113), un angle central de la section courbe (115) de chacune des parties de paroi entraînées (113) étant inférieur à 180 degrés, dans lequel, pour chacune des parties de paroi entraînées (113), chacune des sections droites (116) est inclinée par rapport à l'une respective des deux parties de paroi de guidage (114) adjacentes à la partie de paroi entraînée (113) et est droite.

2. Dispositif de fixation (1) selon la revendication 1, dans laquelle un rayon de courbure (C) de la section courbe (115) de chacune des parties de paroi entraînées (113) est supérieur à une longueur (D) de chacune des sections droites (116) de la partie de paroi entraînée (113).

3. Dispositif de fixation (1) selon l'une quelconque des revendications 1 et 2, dans laquelle la saillie entraînée (112) de la tête de vis (11) comporte une surface opposée à la tige de vis (12) et un évidement (117) qui est en retrait par rapport à la surface dans la direction axiale de l'axe central.

4. Dispositif de fixation (1) selon la revendication 3, dans laquelle une section transversale de l'évidement (117) de la tête de vis (11) sur un plan imaginaire perpendiculaire à l'axe central est configurée pour être l'une parmi une forme hexagonale, une forme hexalobulaire, une forme cruciforme, une forme en étoile, une forme quadrilatérale et une forme combinant une croix et un quadrilatère.

5. Dispositif de fixation (1) selon l'une quelconque des revendications 1 à 4, dans laquelle la tête de vis (11) comprend en outre un siège de butée (111) qui est relié à la tige de vis (12), la saillie entraînée (112) faisant saillie d'un côté du siège de butée (111) opposé à la tige de vis (12).

6. Outil d'entraînement (2) adapté pour entraîner le dispositif de fixation (1) selon la revendication 1, l'outil d'entraînement (2) comprenant :
un corps principal (21) comportant quatre parties de paroi d'entraînement (211) et quatre parties de paroi de guidage (212) qui sont disposées autour d'un axe central de l'outil d'entraînement (2) selon une disposition alternée, les parties de paroi d'entraînement (211) du corps principal (21) étant espacées les unes des autres de manière équiangulaire, chacune des parties de paroi de guidage (212) du corps principal (21) étant droites et comportant deux extrémités opposées qui sont respectivement reliées à deux des parties de paroi d'entraînement (211) du corps principal (21) adjacentes à la partie de paroi de guidage (212) du corps principal (21), les parties de paroi d'entraînement (211) et les parties de paroi de guidage (212) du corps principal (21) définissant de manière coopérative une douille d'entraînement (213), le rapport entre la plus longue distance entre deux des parties de paroi d'entraînement (211) du corps principal (21) qui ne sont pas adjacentes l'une à l'autre sur la plus longue distance entre deux des parties de paroi d'entraînement (211) du corps principal (21) qui sont adjacentes l'une à l'autre étant supérieur à 1,16 ;
dans lequel chacune des parties de paroi d'entraînement (211) du corps principal (21) comporte une section courbe (214) qui définit un arc de cercle et qui comporte deux extrémités opposées ; **caractérisé en ce que** : chacune des parties de paroi d'entraînement (211) comporte en outre deux sections droites (215) qui s'étendent chacune à partir d'une extrémité respective de la section courbe (214) du corps principal (21) et relient entre elles l'une des extrémités respectives de la section courbe (214) du corps principal (21) et l'une respective des deux parties de paroi de guidage (212) du corps principal (21) adjacentes à la partie de paroi d'entraînement (211) du corps principal (21), un angle central de la section courbe (214) de chacune des parties de paroi d'entraînement (211) du corps principal (21) étant inférieur à 180 degrés, dans lequel, pour chacune des parties de paroi d'entraînement (211), chacune des sections droites (215) est inclinée par rapport à l'une respective des deux parties de paroi de guidage (212) adjacentes à la partie de paroi d'entraînement (211) et est droite.

7. Outil d'entraînement (2) selon la revendication 6, dans lequel un rayon de courbure de la section courbe (214) de chacune des parties de paroi d'entraînement (211) de l'outil d'entraînement (2) est supérieur à la longueur de chacune des sections droites (215) de la partie de paroi d'entraînement (211) de l'outil d'entraînement (2).
